# EUROPEAN PATENT APPLICATION

(11) **EP 4 730 730 A1**
(43) Date of publication of application: **22.04.2026**
(21) Application number: 24465582.5
(22) Date of filing: 18.10.2024
(51) Int. Cl.: H04L 41/022, H04L 41/16, H04L 41/28

(54) **OPERATIONS ASSISTANT TOOL FOR A TELECOMMUNICATIONS NETWORK**

(71) Applicant: Vodafone Group Services Limited, Newbury RG14 2FN (GB)
(72) Inventor: HERBEI, Mihai, London W2 6BY (GB)
(74) Representative: Boult Wade Tennant LLP

(57) **Abstract**

There is provided an operations assistant tool for enabling human users to manage a telecommunications network which comprises a plurality of diverse network systems, the operations assistant tool comprising a natural language interface for interaction of the human user with each of the network systems. The operations assistant tool may allow the user to request that the operations assistant tool perform various activities on the telecommunications network, such as: live network data gathering; databases data access; issuing commands; creating, managing and closing known events, mismatch entries, monitoring planned activities; running scripts in various environments; and setting user reminders and follow-ups on issues.

## Description

### Field of the invention

The present invention relates to an operations assistant tool that uses a cloud-based software application for facilitating interactions between an operator and various systems of a telecommunications network. The tool acts as a universal interface and therefore provides a single point of access to the various systems. The tool supports a natural language model so that the operator can interact with the various systems of a telecommunications network using natural language.

### Background section

Telecommunications networks consist of various subsystems, including data transport, signalling, control systems, and customer management interfaces. Current access methods often require separate tools or interfaces for accessing each subsystem, leading to inefficiencies, increased operational costs, and the potential for human error.

In the telecommunications industry, there are lots of various applications which are used individually by both human and machine users. According to best practices of network design, a large telecommunications network should not be built using equipment from only a single vendor, as this can create a dependency between the telecom company running the telecommunications network and the equipment manufacturer, which, in time, might become a risk for the telecom company.

To mitigate such risks, telecom companies often build their telecommunication networks by combining systems and devices from various different vendors. This avoids an over-reliance on any single vendor, but also leads to a necessity to use multiple different management systems to manage the whole network. These network management systems (NMS) do not usually interoperate, and so the telecom companies need to use multiple independent network management systems to manage the whole telecommunications network.

The multitude of network elements in a telecommunications network, including various devices and circuits, and the lack of any single system which brings together all of the network configurations, makes it difficult to document resource allocation across a multi-vendor network.

The telecommunications industry is dynamic and companies in the industry often buy and sell divisions of their companies. Therefore, when a company acquires the systems of another company, this will further lead to multiple different systems being incorporated into the network, as each acquired company would likely have its own set of systems and inventory/resource management databases that are different to the acquiring company.

When multiple different systems have to be individually accessed and managed by multiple teams, this can easily lead to fragmentation in the structure of the network. In large networks, multiple teams have limited responsibilities related to narrow scopes of the functioning of the network. However, those teams still need to work on the same devices. Small errors, traffic re-routings during incidents, planned works and other network tests lead to undocumented changes in the network which, over the years, may become untraceable and increase the response times of operations teams managing the system.

Therefore, it would be desirable to provide an operator (or user, these two terms being used interchangeably in this document) with an interface providing a single point of access to the multiple systems that make up a telecommunications network, so that the operator does not have to access the various systems separately, or arrange for other operators to access the different systems to provide any required information.

It would be further desirable that the operator is not required to understand the various communications protocols for each of the different systems on the telecommunications network, and can instead interact only with the interface using natural language in order to access the various systems of the network.

It would be still further desirable to provide automatic identification of undocumented changes in the network, so that users/operators can be advised if they are working on areas of the network that has been changed or updated and correct any documentation errors.

### Summary of the invention

To address the problems highlighted above, the present invention has been formulated to provide an operations assistant tool to facilitate the interactions between a user (i.e. an operator or an engineer providing maintenance to a network) and the various and diverse systems of a telecommunications network. The operations assistant tool may use a cloud-based software application, and may be accessed via an operator's computing device. The tool acts as a *"universal"* operations assistant, providing a single point of access to all or many of the subsystems of a telecommunications network. Further, the operations assistant tool uses natural language to interact with the operator, such as a chatbot style interface. Optionally, the interface could use voice recognition, to avoid the operator needing to type any instructions. The natural language model only responds within the scope of its purpose and will not engage in any discussions with the users outside its scope.

The operations assistant tool may comprise a core module, which may be executed on a computer processor, and may comprise various further elements. Communication with the diverse network systems may be achieved via interconnection modules, all of which may use a standardised set of rules imposed by the core module for communication. However, as the network systems may be provided by different vendors, these interconnection modules may be specifically designed for their corresponding network system, in order to allow communication with the core module.

Users can also request recurrent processes that will be run by the tool and the information will be provided back to the user.

In terms of interactions with the tool, the user can perform activities like: live network data gathering; databases data access; issuing commands (ping test, ssh, show commands on devices with CLI interface); creating, managing and closing known events, mismatch entries, monitoring planned activities; running scripts in various environments; and setting user reminders and follow-up on issues.

According to one aspect of the invention, there is provided an operations assistant tool for enabling human users to manage a telecommunications network which comprises a plurality of diverse network systems, the operations assistant tool comprising a natural language interface for interaction of the human user with each of the network systems.

Preferably, the natural language interface is provided by a chatbot, which may be trained using machine-learning algorithms or artificial intelligence.

Accordingly, a user may interact with the plurality of network systems by using their natural language, without requiring to learn the specific communication protocols of each network system.

The operations assistant tool may be arranged to allow the user to request access to at least a subset of the functions of the one or more of the plurality of diverse network systems of the telecommunication network. This access may be via a corresponding interconnection module in communication with the operations assistant tool. These interconnection modules may be connected to the operations assistant tool and use a standardised set of rules for communication, and wherein the operations assistant tool is able to translate the user's request in natural language into the standardised set of rules.

The plurality of diverse network systems of the telecommunications network may include at least one of: a ticketing system, a network management system, a software development tool, a network planning tool, an alarm umbrella system and a database. At least one of the plurality of diverse network systems may be supplied by a different manufacturer than the others. The tool may also include its own modules, such as a known events and correlation module, as discussed later.

Each operator of the operations assistant tool may be associated with corresponding user rights limiting the amount of access the operator has to functions of the plurality of diverse network systems of the telecommunications system, and the operations assistant tool maintains the user rights and only grants access to functions of the systems that the operator is authorised to access.

The operations assistant tool may be arranged to identify when more than one operator has queried the same network element or network elements in the same geographical area within a certain time window and generates a potential event alert informing users.

After an operator investigates an issue with the telecommunications network via the operations assistant tool, the operations assistant tool may arrange to store event data in a known-events database providing details of the issue, wherein the event data allows the operations assistant tool to monitor the issue and provide information to any other operator making a query regarding any of the directly or indirectly related network elements, devices or circuits.

The operations assistant tool may be further arranged to use machine learning or artificial intelligence to recognise patterns of actions requested by operators, and provide an operator with suggested actions when a network element is queried by the operator. The operations assistant tool may use previous queries and subsequent actions as training data, and optionally each operator is associated with a seniority score based on the knowledge of the operator, and the training data is prioritised according to the seniority of the operator making the previous queries and actions.

The operations assistant tool may be still further arranged to run scripts in various programming languages on one or more of the plurality of systems of the telecommunications network after receiving a request from an operator in natural language.

Users of the operations assistant tool may be able to share scripts with each other, so that a user can write a script that performs an action on the telecommunications network that can be ran by another user to perform the action.

The operations assistant tool may be arranged to store details of activities that an operator has scheduled to take place during a maintenance window of one of the systems of the telecommunications network, and when the next maintenance window of that system is scheduled, inform a monitoring team that the scheduled activity is to be performed.

The operations assistant tool may be arranged to identify mismatches between details in a documentation database storing details of the systems of the telecommunications network and the actual details of these systems, and storing these details of the mismatches in a mismatch database. When an operator queries a system of the telecommunications network, the operations assistant tool may be arranged to check the mismatch database to see if there are any mismatches associated with the queried system, and if there are, report these to the operator making the query. After identifying a mismatch, the operations assistant tool may be arranged to provide details of the identified mismatches to a team responsible for managing the documentation database.

According to another aspect of the invention, there is provided a telecommunications network comprising: a plurality of diverse network systems; an operations assistant tool, as set out above, enabling human users to manage the telecommunications network, the operations assistant tool comprising a natural language interface for interaction of the human user with each of the plurality of diverse network systems.

### Brief description of the drawings

Embodiments of the invention will now be described, by way of example only, and with reference to the accompanying drawings of which:
Figure 1 shows a schematic diagram showing an operations assistant tool according to an embodiment of the present invention, and its connections to various systems of a telecommunications network;
Figure 2 shows a schematic diagram of how the core module of the operations assistant tool communicates with various vendor's systems through a dedicated interconnection module, according to an embodiment of the invention;
Figure 3 shows the schematic diagram of how the operations assistant tool can receive an input from a user and check the user access rights, according to an embodiment of the invention;
Figure 4 shows the schematic diagram of how the operations assistant tool check the user has access rights, according to an embodiment of the invention;
Figure 5 shows a step-by-step description of information retrieval process using the operations assistant tool, according to an embodiment of the invention;
Figure 6 shows interactions of users with the operations assistant tool and subsequent pattern learning, according to an embodiment of the invention;
Figure 7 shows a schematic diagram of three learned patterns of behaviour, according to an embodiment of the invention;
Figure 8 shows a schematic diagram of a situation where the operations assistant tool has identified several queries from the same geographical area, according to an embodiment of the invention; and
Figure 9 shows a flowchart of how the operations assistant tool deals with an issue where a temporary solution is available, and one where there is no temporary solution, according to an embodiment of the invention.

### Detailed description of the embodiments

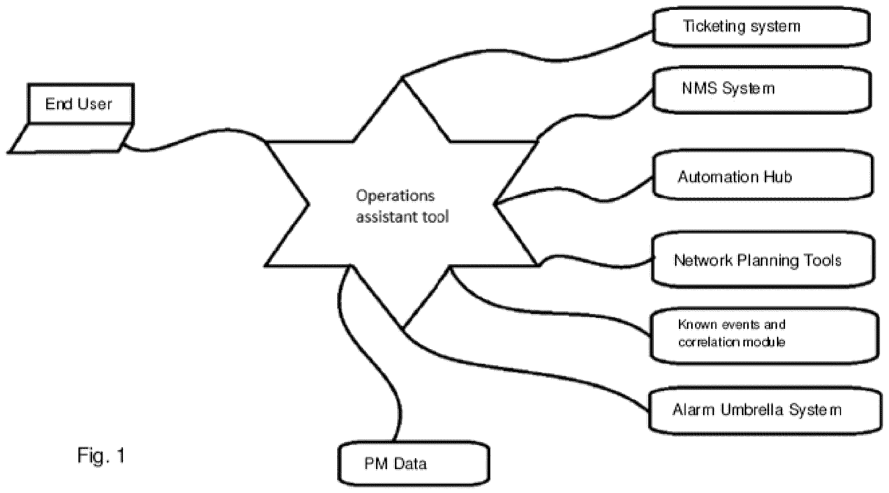

Figure 1 shows a conceptual diagram of the operations assistant tool according to an embodiment of the present invention, and how it connects to various elements of a telecommunications network. As can be seen, the operations assistant tool provides an interface between a user of the system (i.e. an operator managing the telecommunications network) and various different systems of the telecommunications network. The operations assistant tool could be accessed using any electronic communications means, such as the operator's personal computing device, such as a laptop, mobile phone, tablet or other electronic device having a processor. The operations assistant tool could also be accessed using a bespoke electronic device specifically arranged for the purpose of accessing the operations assistant tool.

In the embodiment of figure 1, the operations assistant tool allows the operator to interact with a ticketing system, a network management system (NMS), and automation hub (or software development tool), a network planning tool, a known events and correlation module, an alarm umbrella system and at least one performance management (PM) database. These are mere examples of the types of diverse network systems which the operations assistant tool can facilitate the communication with, and should not be considered exhaustive. Brief explanations of these systems are described below.

The ticketing system may be a software tool used to manage, track, and resolve network issues, customer complaints and service requests. When a problem is detected in the network or reported by a customer, a ticket is created in the system. This ticket may include details like the nature of the issue, affected services and priority level. The ticketing system helps assign the issue to appropriate personnel or teams to ensure accountability and provide real-time updates on the status of the resolution. Additionally, the system keeps a record of all reported problems for analysis, helping improve network reliability and customer satisfaction.

The network management system (NMS) may be a centralised platform that monitors and manages the performance of network elements, such as switches, routers and base stations. The NMS provides real-time visibility into the network's health by detecting faults, tracking performance metrics and managing device configurations. It enables operators/users to quickly identify any issues on the network, optimise resource usage and ensure that services are delivered efficiently

The automation hub is a collection of multiple programming and automation development environments (Python, RPA - UlPath, Automation Anywhere, Java and any other programming language). In the automation hub, users have the possibility to develop and run scrips in various environments. The tool can be used to gather the data necessary as inputs for scrips written by users.

The network planning tool may be a platform that helps manage any planned maintenance of the network infrastructure. The platform may include the strategic process of designing and optimizing a schedule of maintenance to the network infrastructure to provide the most efficient schedule. This might include analysing user demand and geographic considerations to ensure efficient resource allocation. Effective network planning is crucial for maintaining service quality, minimizing operational costs, and enhancing customer satisfaction.

The known events and correlation module is a module of the tool that analyses and links related events or alarms generated by various network elements to identify root causes of the issues. Instead of treating each alarm or event as an isolated incident, the module examines patterns, timing, and dependencies between events to detect underlying problems. A known event is an event with a pattern of event resolution based on internal procedures (this will define the states of the event based on its lifecycle). Known events information includes: Event/problem description, solution flow based on known event type previously defined, directly affected network devices, indirectly affected network devices, and criteria for follow-up in order to go to next stage of event's lifecycle.

The alarm umbrella system may be a centralised platform that monitors and manages alarms generated by various network elements, such as switches, routers, and base stations. It consolidates and prioritises alarms from multiple sources across the network, providing a unified view for network operators.

The at least one performance management (PM) database may be a centralised repository that collects, stores, and analyses performance-related data from various network elements. This data includes metrics such as bandwidth usage, latency, packet loss, call quality, and equipment status. The database enables network operators to monitor the health and efficiency of the network in real-time, identify trends, and detect potential issues before they impact services.

The operations assistant tool may be a cloud-based software application which facilitates the interaction between operators and the network by creating a single point of access to all network systems in the telecommunications network. The main features of the operations assistant tool are the following:
- Modular design
- Natural Language interaction - chatbot interface to the end-user
   - User-based access to all systems with corresponding user rights
- Documentation mismatch management
- Self-rule generation by analysis of user interactions with the application
- Event correlation based on user interactions
- Known-event database and follow-up helper
- Community development ready
- Monitored planned activities
These features are described in more detail below.

The invention is developed using a modular approach. The operations assistant tool comprises a core module which supports a natural language model for interacting with an operator. That is, the operator can use their own language to request operations on the telecommunications network, rather than use specific protocols required by the different systems of the network. For example, the operator could make requests in everyday English, or another natural language. The natural language model would only respond within the scope of its purpose and will not engage in any discussions with the users outside its scope.

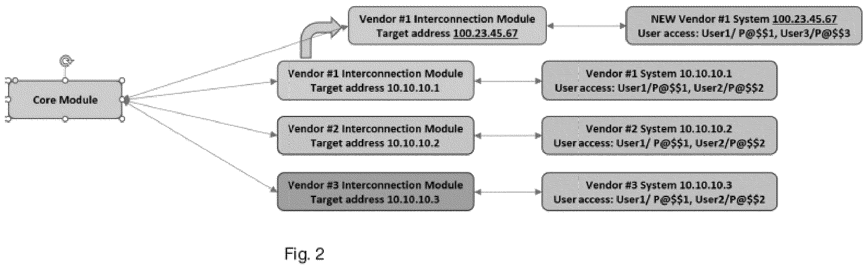

This core module may be connected to various interconnection modules, as shown in figure 2, which themselves access various network systems of the telecommunications network (databases, network management systems, umbrella systems, etc.) or may be part of the operations assistant tool itself. The modular design also allows expanding the functionality of the assistant with other additional modules which can be developed specifically for processes which are not covered in this basic functionality of the tool. The network systems may use different protocols for communication, and require different sets of rules to operate. In figure 2, these different systems are represented by different vendors, Vendor #1, Vendor #2 and Vendor #3. However, whilst the interconnection modules may be developed separately from the core module and arranged to interact with their designated network system, they communication with the core module using a standardised set of rules. That is, communication between the interconnection modules and the core module is the same regardless of the vendor of the target system, and this is achieved by standardisation of the interface between vendor-specific interconnection module and the core module for common parameters.

Vendor specific names for standard features may be mapped to naming from international standards regardless of the name the vendors used for these features. The same mapping is used by the natural language model to understand any requests using the vendor's names for the standard features. Where there are vendor-specific and proprietary features or functions that the network system can perform, these are considered as additional features (rather than standard features), and details of these features need to be fed to core module in order that the core module to understand how to use them.

Each interconnection module may be able to provide access to all of the standard features of their associated network system. Every target system comes with some pre-defined exports or configuration templates. Most of the times, the network operators do not use the standard templates and develop their own. In this case, the user can feed their own template to the natural language model, instruct the assistant what data should be retrieved from target systems. The tool will understand the template and provide a personalised response.

Additional to pure data export, users can also provide instruction on how to interpret the data using the natural language model. For example, for hardware inventory, the standard table contains NE (network entity) name, NE Address and NE Serial Number which can be extracted in an export. The user wants a hardware inventory export containing NE name, NE Address, NE Default Gateway, NE Serial Number, NE Status. This structure can be given to the natural language model and the operations assistant tool will create a new export from available data with the requested information. In case of exports, data is gathered from network and saved somewhere, the path to the export refers to the document where the data will be stored and the file will contain column names, used will have to tell the tool what information should be written in each column.

For every device there is, for example, a standard template to report alarms. If an operator is not using a certain feature, the operator wants to disable alarms related to that feature. The new template for alarms can be fed to the assistant and the assistant will use that template instead of the standard one.

When a new system is integrated into the telecommunications network that is the same as another system already on the network, for example from the same vendor, a new instance of the associated interconnection module acting as an interface to that vendor's systems is created pointing to new system's address. For example, in figure 2, a new system is added from Vendor #1 with IP address 100.23.45.67 is added to the network, when there already exists a system with IP address 10.10.10.1 by this vendor on the network. In this case, a new instance of the Vendor #1 interconnection module is added directing communications to the system with IP address 100.23.45.67. The replacement of any network system of a like-for-like system, may also be facilitated in this manner.

The interface of the operations assistant tool to the user may be chat-bot based, that is, it is based on a natural language model trained to understand the requests of the user. This natural language model knows how to respond to user requests. The operations assistant tool is arranged to identify the information requested by the user, identify the system which should provide the information needed by the user and request the information, and if it is not able to identify where the information the user has requested can be found, combine other relevant information from multiple systems. For ambiguous requests, if the request is not at all understood or the output is considered too large due to the ambiguity, the assistant can communicate with the user to either confirm that the large output is what the user is requesting or try to narrow down the request. When the request is clear, but the data source is either not clear, ambiguous or not specified, the assistant will provide all similar data from all available data sources (unless this matches the criteria for big output mentioned above).

When the request and data source are clear from the user request, the assistant will also provide additional information if mismatches are identified across multiple data sources of the same piece of information. When the requested data is consistent across all data sources, just the requested information may be provided to the user

During the interaction between the user and the operations assistant tool, the system could also provide context information about the requests made by the operator. For example, if a user requests information about the connection of a network element (NE), such as an indoor unit (IDU), the application also checks for management issues related to the network element in a tickets database. Additionally, the operations assistant tool follows the management trail and tries to find all related recent planned works or incidents affecting the management trail of the network element, even if the ticket is not directly related.

During the interaction, the tool analyses the conclusion of the investigation and may ask the user about directly affected NEs or circuits and creates an event for future follow-up. During this interaction, the tool can also ask for relevant reminders or alarms to be set, in order to further track the event. The directly affected circuits and NEs are checked by the tool and analysed so that in future events, the tool can create a pattern to identify the circuits and devices by itself.

As will be discussed in more detail later, apart from interaction with the user, the chatbot-like tool also learns from its interactions and the learnt information is then fed to a learning module. As the amount of information gathered rises, the tool simulates expected developments of the conversation and compares it to the actual queries of the user. As the learning goes on, when the tool reaches a certain level of matches between question asked by the user and its predicted questions, the tool starts to directly provide the information without being asked for it and asks for feedback. After the learned rules are validated through feedback and reaches a high enough trust level, the information may be directly provided without even requiring feedback. In this manner, the operations assistant tool can pre-empt a user's next request, and provide the result of the request before it has been asked, saving time for the user.

If the rule becomes obsolete, the user can provide feedback, and the bot will reduce the trust score of that rule leading to retirement of the rule. This learning process will prioritise feed from teams of experts (such as 2nd line engineers and 3rd line engineers) as these teams represent a more trustful source for learning and the learned rules from expert teams will be cascaded to teams with more general knowledge (such as 1st line engineers).

Security of connected systems is crucial. As the people using the system are all employees or external partners with certain rights on various system, the information provided by the system should be according to users' rights on those systems and to relationship between responsible teams.

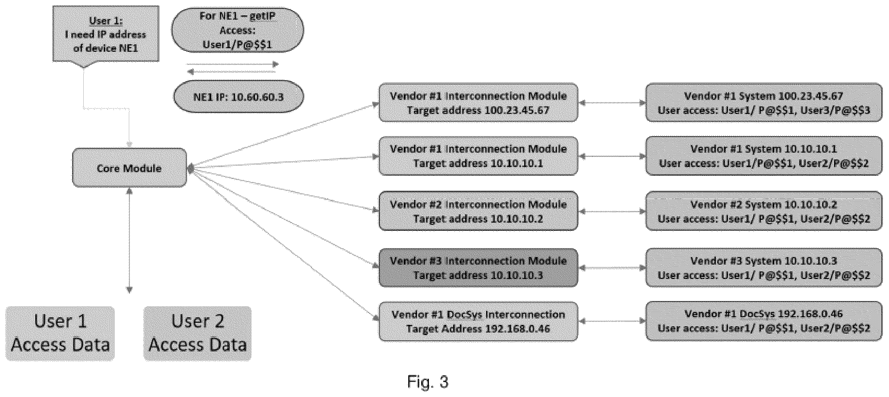

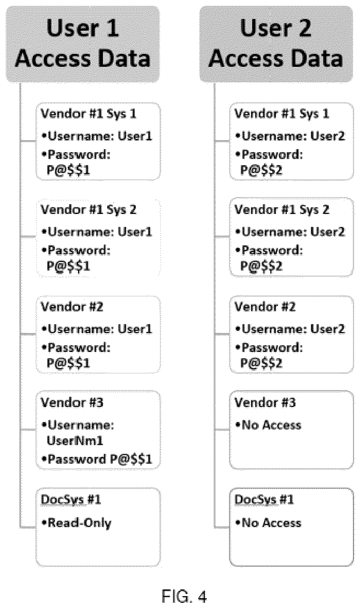

Figure 3 is similar to figure 2, but also shows the additional document system DocSys of Vendor #1, with IP address 192.168.0.46, and associated interconnection module. Each of the systems is associated with user access, allowing one or more users to access the system using one or more passwords, e.g. User1/P@$$1. Figure 3 also shows User 1 and User 2 access data, which the core module uses to provide access to the various systems. Further details of the user data are shown in figure 4. This user access data includes a list of the systems that a particular user has access, and their access credentials, such as username and password. In figure 3, users 1 and 2 have access to the systems of vendors #1 and #2. However, User 2 does not have access to Vendor #3 or DocSys #1 and User 1 only has read-only access to DocSys #1.

When a user makes a request to access the functions of any of the systems, for example requesting the IP address of network element NE1, as in figure 3, the operations assistant tool may need to provide proof of that the user has the required access rights. As noted above, this may be by the tool providing a username and password of the user to the system, so it can check that the user has adequate rights to access the requested function. Alternatively, the systems may use a token-based access system. In this case, a rights-pattern based token is generated for each target system and for each user account of the operations assistant tool, the token to be used is mapped. The tool then connects to the target system using the token indicated by the user account. The system of figure 3 is simplified to explain the use of the access data. More detailed descriptions of how the tool provides access to data is discussed later.

The operations assistant tool can also run scripts developed in other systems. As interconnections cannot always be implemented on the backend of the target system, solutions like robotic process automation (RPA) can be used to obtain data from network management systems. This is achieved by asking the operations assistant tool to execute a script and interpret the output of the script and provide it to the user (operator) of the operations assistant tool.

Given the split of activities of teams based on devices in responsibility, very often, where a team's scope ends, another team's scope starts. For such cases, the two teams can provide some basic check (read-only) scripts to be used by the other teams in order to be able to have some initial conclusions. These scripts can be used to see some parameters which are essential in most common issues encountered. To achieve script sharing between close interacting teams, a map is created. The map contains knowledge level and connections between different teams. The users are allocated to those teams. Based on this mapping, users that don't have accounts for certain devices can gather valuable information from devices they do not normally access or have knowledge on.

For example, radio devices are connected to routers. Radio experts do not have access to routers and have no knowledge to perform checks on them. In this type of interaction, a member of the radio team can ask the IP teams to develop a short script performing some essential steps in troubleshooting (check existence of configuration on router side, check port status, check learned MAC addresses, etc.). Whenever the radio team suspects a problem on the router side, the operations assistant tool can run the script to provide an interpreted output from the router side and people in the radio team can understand in which area of the network the problem is located and address it according to those outputs.

Referring back to figures 3 and 4, if User 1 is part of Team 1 and is responsible for devices on the system from Vendor #3 and User 2 is part of Team 2 and is responsible for devices connected to devices in the responsibility of Team 1, but does not have access to those devices, then User 1 may write a script with checks relevant for users in Team 2 and shares the script with User 2. User 2 may then request that the operations assistant tool run the shared script to provide User 2 with the desired information, without the need for contacting anyone in Team 1 (i.e. User 1). The operations assistant tool may use a user token provided by Team 1 to access the system of Vendor #3 and run the scripts shared with Team 2 in order to provide the outputs of the script to users within Team 2. In this manner, members of Team 2 can access relevant information from devices managed by Team 1, without having to waste time and resources requesting the information from Team 1.

During operational activities, mismatches or missing information situations may be encountered. For example, network elements may have been given the wrong IP address, or the IP address has changed from the original IP address. In such circumstances, these mismatches can be documented by the operations assistant tool and a log of such mismatches can be created, for example in a mismatch database. This database can keep a log of any mismatches between the live data (e.g. actual IP addresses) and planned data (e.g. planned IP addresses). These mismatches should be addressed to the team responsible for managing the documentation database and based on their decision the mismatch should be solved either by updating the documentation or by changing the live network in line with the planned data.

The mismatches database should always be checked by the operations assistant tool whenever a query is raised by a user. In the case where a device or circuit being queried does appear in the mismatch database, the data regarding the mismatch should be provided to the user such that they are aware about the known differences between the documentation and the live network.

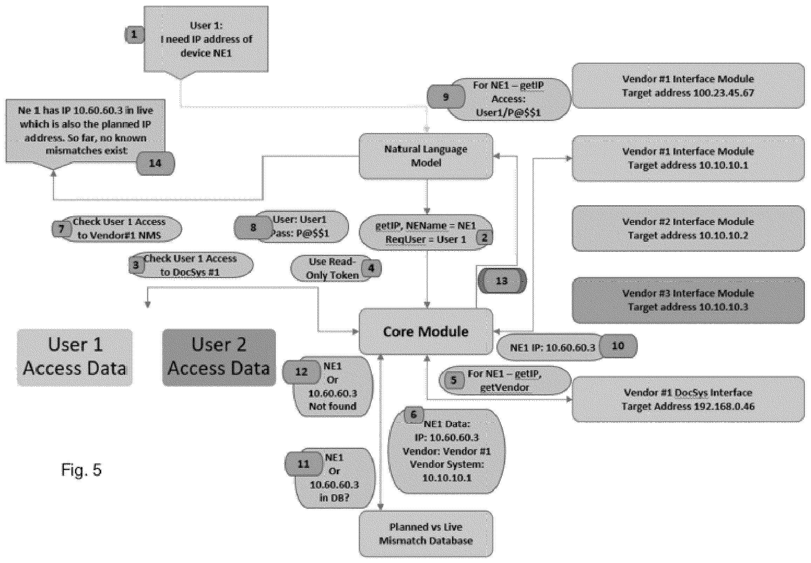

Figure 5 depicts a step-by-step description of information retrieval process using the operations assistant tool. Firstly, at step 1, User 1 requests, using natural language that he needs the IP address of a network element (NE1) by saying "*I need IP address of device NE1".* In step 2 the natural language model translates this to the standardised communication protocol of the core module and interconnection modules and sends the request to central module. In this case, the original input is translated to *"getIP, NEName = NE1, ReqUser = User 1".* The core module receives the request and, as the data source for the information is not specified, information will be requested from multiple sources - documentation system (planned database) and the NE1 vendor network management server. At step 3, a check is made whether User 1 has access rights to the relevant systems, for example the documentation system DocSys. Once User 1's access rights have been checked and, here, a read-only token is provided in step 4 allowing access to the DocSys in step 5, wherein the core module requests the information NE IP of NE1 from DocSys and additionally request further information necessary to identify the NMS (vendor) the NE1 belongs to. The DocSys system indicates in step 6 that NE1 is located on the system of Vendor #1 with IP address 10.10.10.1. The core module then checks if User 1 has access to the system of Vendor #1 in step 7, and because User 1 has the relevant access, the username and password are forwarded to the core module in step 8.

In step 9, the request for the IP address is forwarded to the system of Vendor #1, along with the username and password of User 1, which in turn provides the IP address in step 10. In step 11, a mismatch database is consulted to check whether there are any entries in the mismatch database relating to NE1. In this case, there is no record of a mismatch which is then reported to the core module in step 12. At this point, in step 13, the core module combines the information gathered and issues its response to the natural language model, and a natural language response is provided to the user in step 14. In this case, the response reads *"NE1 has IP 10.60.60.3 in live which is also the planned IP address. So far, no known mismatches exist."*

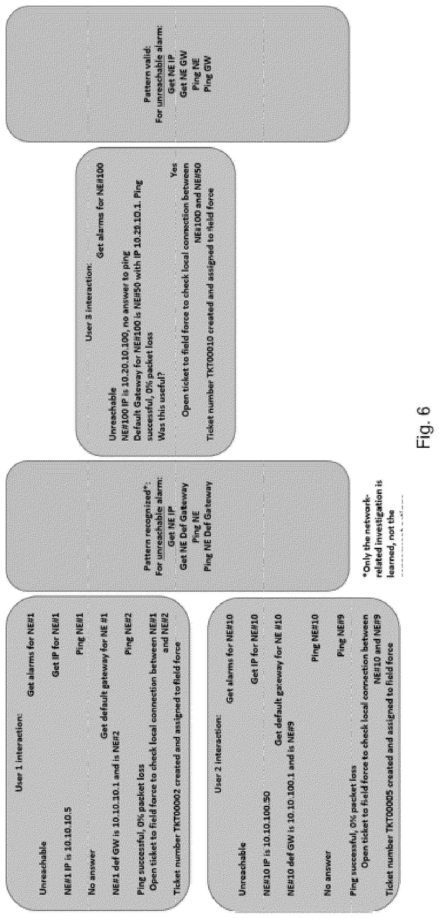

As noted earlier, the operations assistant tool is able to learn how users deal with various events by monitoring the previous events and making note of the users' subsequent actions. For example, in figure 6, User 1 interacts with the operations assistant tool by requesting the alarms for one of the network elements (NE#1). When there is an alarm that NE#1 is *"unreachable",* User 1 requests the IP address for NE#1. This IP address will be looked-up by the operations assistant tool in the manner described previously, and assuming the user has access rights will be provided to the user. Here, the value 10.10.10.5 is provided as the IP address. User 1 then requests that the operations assistant tool pings the IP address of NE#1, but receives no answer. In response, User 1 then requests the default gateway for NE#1, and is provided with is informed that the gateway's IP address is 10.10.10.1, and this has been assigned as NE#2. User 1 now requests that operations assistant tool pings NE#2, which is successful. Therefore, it would seem likely that there is a problem with the connection between NE#2 and NE#1, and so the user requests that the operations assistant tool raises a ticket so that an engineer will check the connection between NE#2 and NE#1.

In a separate interaction with a second user, User 2, the operations assistant tool is again asked to get an alarm for a network element, this time NE#10. When the operations assistant tool responds that NE#10 is *"unreachable",* User 2 makes the same order of requests to the operations assistant tool as User 1, except that he jumps straight to requesting the default gateway to NE#10, rather than pinging NE#10. It may be that User 2 is more knowledgeable than User 1, and recognises that if there is no response from NE#10 regarding any alarms, then it would unlikely response to a ping request. From these interactions, the operations assistant tool is able to recognise a pattern of behaviour when the alarms of a network device indicate that the device is unreachable, as shown in figure 6. In this case, the pattern relating to an unreachable alarm is to obtain the IP address of the default gateway and ping it, and if the ping is successful, raise a ticket to investigate the connection between the network element and its default gateway.

Therefore, when a third user, User 3, requests the alarms for NE#100, and the alarms are unreachable, the operations assistant tool recognises that this falls into a known pattern of behaviour and automatically requests the default gateway to NE#100 and pings it, providing User 3 with the results. At this point, the learnt pattern of the operations assistant tool can be validated, and the operations assistant tool may request if the further information was useful, and if a ticket should be opened. If User 3 confirms this, the learnt pattern for an unreachable alarm of a network element can be validated, and a ticket issued for an engineer to investigate the connection between NE#100 and its default gateway.

For self-generated rules of issue findings, some general engineering guidelines can also be fed to the operations assistant tool. The tool can then create patterns from these guidelines and when a certain network element is queried by the user, the tool can check if the guidelines are correctly applied to that network element. If the live configuration of the element is not in accordance with the general guidelines, the user is warned about the mismatch.

Based on the company structure, each team will receive a seniority score based on the expected knowledge level of that team. Whilst learning patterns of user interactions, these interactions may be prioritised following the order of the seniority score of the user. The seniority scoring can also be expanded to a multi-level hierarchy going down to user level instead of team level. The pattern learning process will try to match the procedures across multiple teams and try to learn from each team mostly based on the seniority score.

If some procedures are only used by teams with lower seniority score, those procedures will also be mapped and learnt by the tool. In case the same procedure is identified across multiple teams, the procedure implemented by the team with highest seniority level will be learnt and used by the tool. For example, if front-office team and back-office teams implement the same procedure and it is identified by the tool that the back-office team has higher seniority score, then the procedure performed by this team will be prioritised for the learning process.

As the team performs the interactions with the tool, procedures and actions will be identified from multiple users. If the procedures are the same by the different users, then this makes the learning fairly straightforward. However, if different users perform different procedures in the same situations, then the learning will be prioritised according to the users' seniority score. For procedures performed by only one team, the information will be taken into consideration as there is no alternative, and the learning mechanism will gather data from that team regardless of the seniority score.

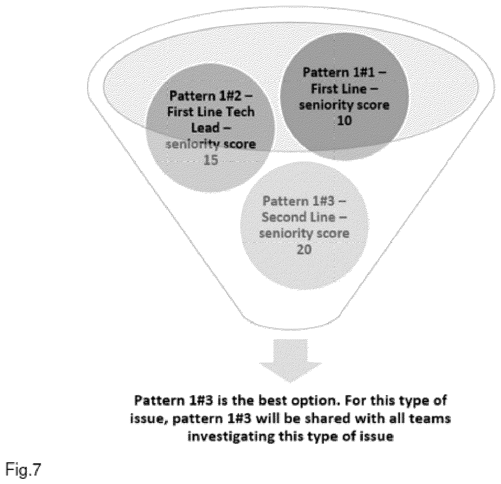

In figure 7, the operations assistant tool has identified three different patterns, patterns of behaviour, 1#1, 1#2 and 1#3 from different users with different levels of seniority. Here, the seniority level of pattern 1#3 is the highest, and so the learning mechanism rates this this pattern as being more trustworthy, and when the same issue arises in future, the operations assistant tool will more likely offer this pattern of actions to the user.

Running on a cloud infrastructure, the application can track the discussion between individual users and the operations assistant tool. When the tool identifies more people querying the same network element or elements in the same geographical area within a given time window, the system can inform the people searching similar information at the same time, that a sudden increase of searches has occurred, making them aware that they might check the same issue and start an information flow by connecting all users searching information on same event.

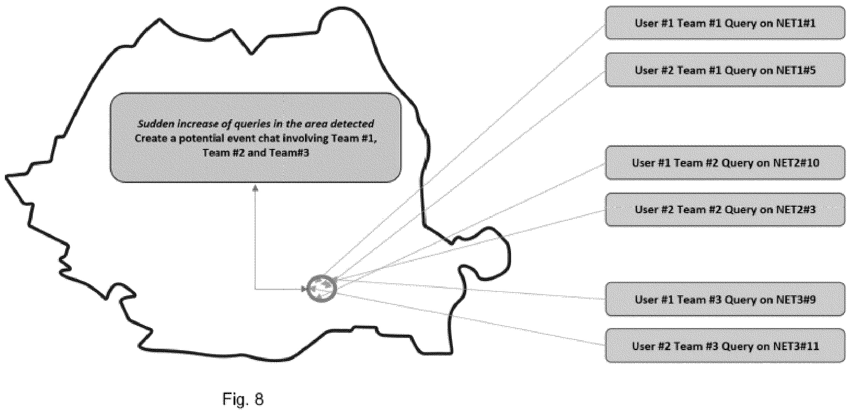

As an example, figure 8 shows several users all querying network elements within a given geographical area. The network may be split into various network scopes based on the technology used to achieve communication, and every such network scope is assigned to a team within the network operator. Therefore, multiple teams operating on the network are checking the network devices in their scope within same geographical area (ex. IP-team, RadioAccess Team, Transmission Team). Here, Users #1 and #2 of Team #1, Users #1 and #2 of Team #2, and Users #1 and #2 of Team #3, have all queried network elements in the area represented by the circle, within the given geographical area.

Where this number of queries is above the expected number queries for the networks, an *"potential event alert"* may be raised to indicate there may be a larger issue in this area. In this case, the users can be alerted to the fact that there may be an underlying cause for all of the users' queries. Optionally, a chat involving the members may be opened in order to enable a discussion regarding the nature of the queries.

The tool could use artificial intelligence or machine learning to help to recognise when queries raised within a given time window and a given geographical area are likely to be correlated, or when they are just coincidence. The information regarding such correlations can be fed into the learning module to teach it to recognise these correlations. Where an identified correlation has been identified, users could be asked for feedback regarding the correlation.

This type of correlation can also be extended for a longer period and each request relating to a certain network element can be monitored for a longer period after the inquiry. In the case that a documentation error causes a loop between two events, the users querying the same information in consecutive days can be put in contact (for example, if a station in live context is using same resource as another station in a plan and the first station is affected by implementation of the plan for the second one).

After a user investigates an issue, the operations assistant tool can request a ticket is issued for handling the issue, identify the exact circuits/systems affected by the issue, set any necessary alarms or performance events to follow-up on and open a known event in a known-events database. An event in the known-events database is an information collection bringing together ticket number, all affected elements (directly or indirectly), follow-up criteria (to evaluate event end). After an investigation is done, a ticket is sent by the user and the tool asks if an event is necessary for the investigated issue. If the issue should be documented the assistant collects the data in the event and creates the entry. This event will then be monitored by the tool and may be mentioned when any future query is made by any user about any of the directly or indirectly related network elements - devices or circuits - whilst the ticket is still open. When the tool considers an event ended, the event may be moved to an observation status and all these events will be advertised to responsible teams to confirm closure (closure criteria may include that the alarms are cleared, performance checked and the ticket closed).

In cases when traffic is restored by a temporary workaround, the tool can be instructed to open a known issue event, follow-up on alarms or performance events and, after the alarms are cleared or performance events disappear, the tool may inform the team who opened the known event that they can revert the workaround. This type of event should contain details about the temporary workaround done and the instructions to revert the changes. Based on needed known events type, multiple processes can
be developed and implemented in the known events database module.

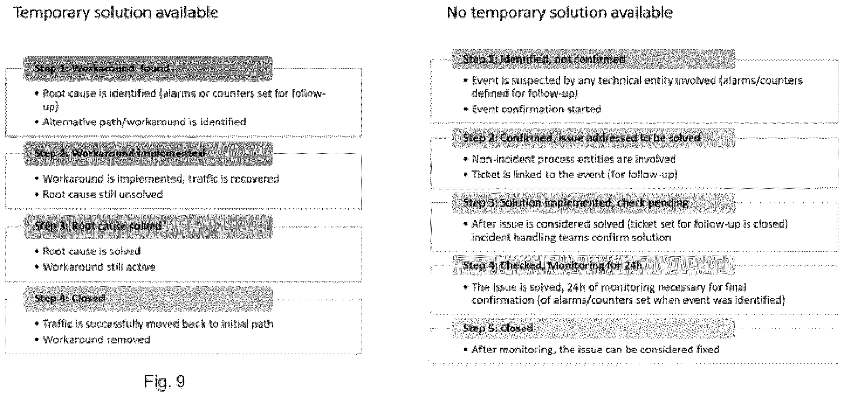

Figure 9 provides two flowcharts, one where a temporary solution the issue is available and where no temporary solution is available. As can be seen, when a temporary solution is available, in step 1, the root cause is identified and an alternative path/workaround is identified. In step 2, the workaround is implemented whilst the root cause is still unsolved. In step three, the root cause is solved whilst the workaround is still active, and in step 4, the traffic is moved back to the original path, and the workaround removed.

In the case where there is no temporary solution, in step 1, the event is suspected and an event confirmation is started. In step 2, the non-incident process entities are involved, and a ticket is linked to the event to ensure that it is followed up. In step 3, the solution is implemented, and the issue is considered solved, pending checking. In step 4, the solution is checked, which may involve monitoring the issue for a set amount of time, for example 24 hours. Finally, in step 5, the event is closed, and the issue is considered fixed.

The operations assistant tool also provides a script development environment. The users can benefit from interconnection of the system to various network systems and develop sequences of instructions for the tool accompanied by variables to indicate target systems.

In this development environment users should be able to run scripts in various programming languages and combine functionalities of both the tool and the programming environments (for example the tool gets export data from target system, saves it temporarily run a Python script loading that data and processing it then provide the answer to the user). The scripts can be developed either internally on the platform or externally.

This feature also allows versioning of the scripts allowing developers to enhance scripts without affecting the already published version. There are three states for the scripts - alpha, beta and stable version. The developers can use these versions to allow testing of the script with a smaller group before releasing it to everybody who has access. Every time a stable version is released the newer stable version will replace the old script.

During normal activities, there are some tests or activities which should be done during a maintenance window, rather than when the telecommunications network is running normally. The operations assistant tool should offer the option for teams to schedule certain activities to be run in the future, during the next maintenance window. Perhaps an old and network element needs replacing or resetting, or there is another non-urgent maintenance of the network that should be carried out. When such an activity is scheduled, the tool identifies the responsible monitoring team during the maintenance window and informs them to implement the scheduled activity. A user from the monitoring team acknowledges the activity and takes responsibility to track it. Once the scheduled activity is performed, the user marks the activity as completed. In this manner, the tool acts as a *"virtual agent"* to perform some recurrent actions or plan and inform about some activities. This virtual agent may perform at least the following tasks:
- Monitoring tasks - virtual agent checks for counters change and alarm occurrence for a defined period of time and gives the information back to requester.
- Scheduling tasks - virtual agent receives an activity to be performed outside normal business schedule of the scheduling agent and informs the permanent monitoring team about the activity during the time when the activity is scheduled, assigns it to a human operator who will mark the activity as finished after the work is done.
- Recurrent events - the virtual agent can be instructed to repeated perform at a defined interval of time a certain task.

As can be seen, the present invention provides a system and method for allowing a user to interact with the various and diverse interconnection modules of a telecommunications network using natural language via an operations assistant tool. The user can request that the operations assistant tool perform various activities on the telecommunications network, like: live network data gathering; databases data access; issuing commands (ping test, ssh, show commands on devices with CLI interface); creating, managing and closing known events, mismatch entries, monitoring planned activities; running scripts in various environments; and setting user reminders and follow-up on issues

Although particular embodiments have been described as examples to illustrate the invention, a number of alternatives and variations would be apparent to the skilled person without departing from the invention as set out in the claims.

## Claims

1. An operations assistant tool for enabling human users to manage a telecommunications network which comprises a plurality of diverse network systems, the operations assistant tool comprising a natural language interface for interaction of the human user with each of the network systems.

2. The operations assistant tool of claim 1, wherein the natural language interface is provided by a chatbot.

3. The operations assistant tool of claim 2, wherein the chatbot is trained using machine-learning algorithms or artificial intelligence.

4. The operations assistant tool of any preceding claim, wherein the operations assistant tool is arranged to allow the user to request access to at least a subset of the functions of the one or more of the plurality of diverse network systems of the telecommunication network.

5. The operations assistant tool of any preceding claim, wherein access to each of the plurality of diverse network systems is via a corresponding interconnection module in communication with the operations assistant tool.

6. The operations assistant tool of claim 5, wherein the interconnection modules are connected to the operations assistant tool and use a standardised set of rules for communication, and wherein the operations assistant tool is able to translate the user's request in natural language into the standardised set of rules.

7. The operations assistant tool of any preceding claim, wherein the plurality of diverse network systems of the telecommunications network includes at least one of: a ticketing system, a network management system, a software development tool, a network planning tool, a known events and correlation module, an alarm umbrella system and a database.

8. The operations assistant tool of any preceding claim, where in at least one of the plurality of diverse network systems is supplied by a different manufacturer than the others.

9. The operations assistant tool of any preceding claim, wherein each operator of the operations assistant tool is associated with corresponding user rights limiting the amount of access the operator has to functions of the plurality of diverse network systems of the telecommunications system, and wherein the operations assistant tool maintains the user rights and only grants access to functions of the systems that the operator is authorised to access.

10. The operations assistant tool of any preceding claim, wherein the operations assistant tool is arranged to identify when more than one operator has queried the same network element or network elements in the same geographical area within a certain time window and generates a potential event alert informing users.

11. The operations assistant tool of any preceding claim, wherein after an operator investigates an issue with the telecommunications network via the operations assistant tool, the operations assistant tool is arranged to store event data in a known-events database providing details of the issue, wherein the event data allows the operations assistant tool to monitor the issue and provide information to any other operator making a query regarding any of the directly or indirectly related network elements, devices or circuits.

12. The operations assistant tool of any preceding claim, wherein the operations assistant tool is arranged to use machine learning or artificial intelligence to recognise patterns of actions requested by operators, and provide an operator with suggested actions when a network element is queried by the operator.

13. The operations assistant tool of claim 12, wherein the operations assistant tool uses previous queries and subsequent actions as training data, and optionally each operator is associated with a seniority score based on the knowledge of the operator, and the training data is prioritised according to the seniority of the operator making the previous queries and actions.

14. The operations assistant tool of any preceding claim, wherein the operations assistant tool is arranged to run scripts in various programming languages on one or more of the plurality of systems of the telecommunications network after receiving a request from an operator in natural language.

15. The operations assistant tool of any preceding claim, wherein users of the operations assistant tool are able to share scripts with each other, so that a user can write a script that performs an action on the telecommunications network that can be ran by another user to perform the action.

16. The operations assistant tool of any preceding claim, wherein the operations assistant tool is arranged to store details of activities that an operator has scheduled to take place during a maintenance window of one of the systems of the telecommunications network, and when the next maintenance window of that system is scheduled, inform a monitoring team that the scheduled activity is to be performed.

17. The operations assistant tool of any preceding claim, wherein the operations assistant tool is arranged to identify mismatches between details in a documentation database storing details of the systems of the telecommunications network and the actual details of these systems, and storing these details of the mismatches in a mismatch database.

18. The operations assistant tool of any claim 17 wherein when an operator queries a system of the telecommunications network, the operations assistant tool is arranged to check the mismatch database to see if there are any mismatches associated with the queried system, and is there are, report these to the operator making the query.

19. The operations assistant tool of claim 17, where in after identifying a mismatch, the operations assistant tool is arranged to provide details of the identified mismatches to a team responsible for managing the documentation database.

20. A telecommunications network comprising:
a plurality of diverse network systems;
an operations assistant tool as set out in any preceding claims and enabling human users to manage the telecommunications network, the operations assistant tool comprising a natural language interface for interaction of the human user with each of the plurality of diverse network systems.
